# EUROPEAN PATENT APPLICATION

(11) **EP 3 842 282 A1**
(43) Date of publication of application: **30.06.2021**
(21) Application number: 20791660.2
(22) Date of filing: 18.03.2020
(51) Int. Cl.: B60L 58/12, H02J 7/14

(54) **POWER GENERATION AND ENERGY STORAGE POWER SUPPLY SYSTEM OF SHAFT END GENERATOR, AND POWER SUPPLY METHOD THEREOF**

(30) Priority: 15.04.2019 CN 201920501870 U
(71) Applicant: Jiangsu OCPT Institute Co., Ltd., Changzhou, Jiangsu 213000 (CN)
(72) Inventor: HE, Haijun, Changzhou, Jiangsu 213000 (CN)
(74) Representative: Novagraaf Technologies
(86) International application number: PCT/CN2020/079978
(87) International publication number: WO 2020/211589

(57) **Abstract**

A power generation and energy storage power supply system of a shaft end generator, and a power supply method thereof are provided. The power supply system includes a shaft end generator (2), a rectifier (3), an energy storage device (4), an inverter (7), and a programmable logic controller (PLC) (6). The shaft end generator (2) is driven by an axle to generate electric energy and supplies the electric energy to the rectifier (3), and the rectifier (3) sends current to the energy storage device (4) for power supply and/or directly sends the current to the inverter (7). The PLC (6) switches power supply working conditions in real time according to collected power information of the energy storage device (4). When the energy storage device (4) meets an electrical load, the PLC (6) controls the rectifier (3) and/or the energy storage device (4) to transmit the current to the inverter (7). Otherwise, the rectifier (3) is controlled to send the rectified current to the energy storage device (4) for charging, and a charging source is derived from the shaft end generator (2) or the mains supply. The flexibility of vehicle marshalling is improved. The shaft end generator (2) is used, the size is small, and the cost is low.

## Description

### Technical Field

The present invention relates to the technical fields of rail transit (e.g. locomotive freight), highway transportation, and non-road transportation, and in particular to a power generation and energy storage power supply system of a shaft end generator and a power supply method thereof.

### Background Art

For a railway carriage and wagon, an external power supply is needed for charging electric equipment (a light, an electric water heater, a refrigerator and the like) and an energy storage device of the vehicle. Two power supply technologies are mainly used at present, including 1) centralized power supply through a head power supply (power from locomotive to wagon), and 2) independent distributed power generation for the vehicle. The centralized power supply through the head power supply is inconvenient for flexible marshalling at a marshalling station and cannot meet the diversity requirements of passenger transportation and freight transportation, so that there is no much practical value. The existing train power supply system is only suitable for passenger trains and is not suitable for freight trains. The railway wagon has the characteristics of severe working conditions and frequent marshalling, it is difficult to implement a mode of supplying power to the railway wagon by a traction engine or a power generating car through a cable, and installation of an independent distributed self-generating device on a single wagon of the railway vehicle is a research direction to solve this problem. The railway transportation lines in China are widely distributed, large in transportation volume, low in transportation cost, energy-saving and environment-friendly, but because railway freight vehicles lack independent distributed power generation and distribution systems, the railway transportation cannot enter the fresh food transportation market which needs heat insulation. The independent distributed power generation vehicles may be freely combined and marshaled in the application process, the transportation flexibility is high, and the actual requirements of transportation enterprises are met. In the past decades, the independent distributed power generation vehicles need to be equipped with an independent internal combustion engine power generation system, but an internal combustion engine is high in power generation cost and loud in noise and emits a large amount of polluting gases, so that it does not meet a development direction of energy conservation and emission reduction. In the existing related patents such as the patent with the application number of 201510653776.8, the solution is that a voltage conversion unit converts a direct-current voltage output by an energy storage unit into a direct-current voltage required by a control unit and an electronic device of the wagon, but an alternating-current power supply with high-power electricity demands cannot be provided. In the patent with the application number of 201620172593.4, an energy storage device is directly used to output a low-voltage and low-power direct current, but an alternating-current power supply with high-power electricity demands cannot be provided.

During manufacturing, due to the oversize of other generators (such as generators driven by axle belts), a body structure of the railway wagon needs to be redesigned, the high cost and complex maintenance working conditions determine that this solution is difficult to implement, and there is also an electric energy storage problem.

### Summary of the Invention

Objectives of the present invention are to at least solve the technical drawbacks.

Therefore, one objective of the present invention is to provide a power generation and energy storage power supply system of a shaft end generator and a power supply method thereof, so that equipment can be charged by utilizing a mains power grid, when a wagon does not operate, the wagon can supplement electric energy as needed at a marshalling station, when the wagon operates, an axle rotates to drive a generator to generate power, and at this moment, no external power supply is needed for supplying power. Meanwhile, the flexibility of wagon marshalling is improved.

In order to achieve the above objective, an embodiment of one aspect of the present invention provides a power generation and energy storage power supply system of a wagon shaft end generator, including a shaft end generator, a rectifier, an inverter, and a programmable logic controller (PLC).

The shaft end generator is fixedly connected with a vehicle axle, and the vehicle axle rotates to drive the shaft end generator to generate power. The shaft end generator is electrically connected with the rectifier, and the rectifier is connected with an energy storage device in parallel and then connected with the inverter. The inverter is connected with an electrical load. The shaft end generator is configured to send generated current to the rectifier, the current is rectified by the rectifier, and the rectifier sends the rectified current to the energy storage device for power supply and/or directly sends the current to the inverter.

The PLC is configured to collect present power information of the energy storage device and switch power supply working conditions according to the collected power information.

Working condition 1: when the present power information of the energy storage device meets the requirement of the electrical load, the PLC controls the current of the energy storage device and/or the rectified current to be directly sent to the inverter.

Working condition 2: when the present power information of the energy storage device cannot meet the requirement of the electrical load, the PLC controls the rectifier to directly send the rectified current to the energy storage device for charging, and when the energy storage device is charged to a set value, the energy storage device is restored to supply power to the inverter.

Working condition 3: if the load does not need to use electricity or the output power of the rectifier is greater than the power consumed by the load, the rectifier charges the energy storage device to a full upper limit set by a battery management system (BMS).

Preferably, the energy storage device is connected with the BMS, and the BMS is configured to collect the present power information of the energy storage device and send the collected power information to the PLC.

Preferably in any one of the above embodiments, one end of the rectifier in parallel connection with the energy storage device is connected with the inverter by connecting an electromagnetic relay; a driving coil of the electromagnetic relay is connected with the PLC; and the PLC controls a contact action of the electromagnetic relay to switch the power supply working conditions.

Preferably in any one of the above embodiments, the PLC is wirelessly connected to a cloud platform, and when the PLC detects that the residual power of the energy storage device reaches an alarm line, the PLC sends alarm information to the cloud platform, and informs corresponding personnel through a remote reporting system of the cloud platform to timely supplement power to the energy storage device through an external mains supply.

The present invention also provides a power generation and energy storage power supply method of a shaft end generator, including the following steps:
S1: connecting a shaft end generator with a vehicle axle, driving the shaft end generator to generate power using the rotation of the vehicle axle, sending generated current to a rectifier by the shaft end generator, and rectifying the current by the rectifier; and
S2: collecting present power information of an energy storage device by a PLC, and switching power supply working conditions according to the collected power information.

Working condition 1: when the present power information of the energy storage device meets the requirement of an electrical load, the PLC controls the current generated by the energy storage device and/or the current rectified by the rectifier to be directly sent to an inverter.

Working condition 2: when the present power information of the energy storage device cannot meet the requirement of the electrical load, the PLC controls the rectifier to directly send the rectified current to the energy storage device for charging, and when the energy storage device is charged to a set value, the energy storage device is restored to supply power to the inverter.

Working condition 3: if the load does not need to use electricity or the output power of the rectifier is greater than the power consumed by the load, the rectifier charges the energy storage device to a full upper limit set by a BMS.

Preferably, S2 further includes: when the PLC collects the present power information of the energy storage device, collecting the present power information through the BMS, connecting the energy storage device with the BMS, collecting the present power information of the energy storage device by the BMS, and sending the collected present power information of the energy storage device to the PLC.

Preferably in any one of the above embodiments, in S2, when the power supply working conditions are switched, an electromagnetic relay is connected with one end of the rectifier in parallel connection with the energy storage device, and the end is connected with the inverter through the electromagnetic relay; a driving coil of the electromagnetic relay is connected with the PLC; and the PLC controls a contact action of the electromagnetic relay to switch the power supply working conditions.

Preferably in any one of the above embodiments, the method further includes: S3, wirelessly connecting the PLC to a cloud platform, when the PLC detects that the residual power of the energy storage device reaches an alarm line, sending alarm information to the cloud platform by the PLC, and informing corresponding personnel through a remote reporting system of the cloud platform to timely supplement power to the energy storage device through an external mains supply.

Compared with the prior art, the power generation and energy storage power supply system of a shaft end generator and the power supply method thereof according to the embodiments of the present invention at least have the following advantages.

The shaft end generator is used, the equipment size is small, and the cost is low. The installation space is saved, and transmission risks such as hydraulic oil leakage are reduced. Equipment can be charged by utilizing a mains power grid, when a vehicle does not operate, the vehicle can supplement electric energy as needed at a marshalling station, when the vehicle operates, an axle rotates to drive a generator to generate power, and at this moment, no external power supply is needed for supplying power. Meanwhile, the flexibility of vehicle marshalling is improved.

Additional aspects and advantages of the present invention will be set forth in part in the following description and, in part, will be apparent from the following description, or may be learned by practice of the present invention.

### Brief Description of the Drawings

The foregoing and/or additional aspects and advantages of the present invention will be apparent and easily understood from the description for the embodiments with reference to the accompanying drawings, in which:
Fig. 1 is a circuit connection block diagram of a power generation and energy storage power supply system of a shaft end generator according to the present invention.

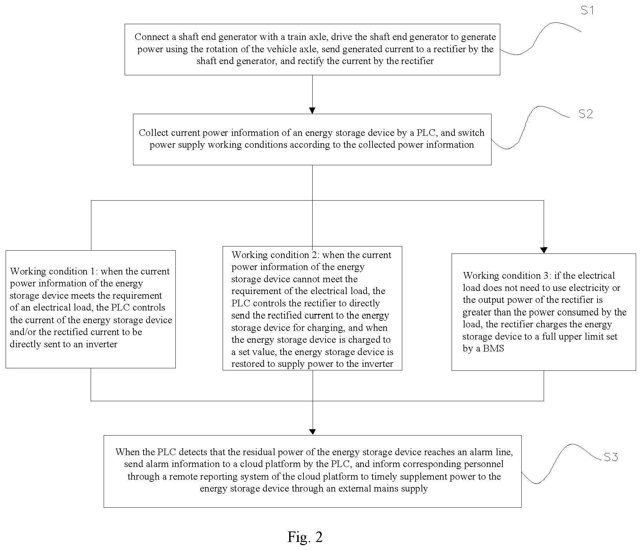

Fig. 2 is a flowchart of a power generation and energy storage power supply method of a shaft end generator according to the present invention.

In the figures:
1, vehicle axle; 2, shaft end generator; 3, rectifier; 4, energy storage device; 5, BMS; 6, PLC; 7, inverter; 8, cloud platform.

### Detailed Description of the Invention

The embodiments of the present invention will be described in detail below, and examples of the embodiments are illustrated in the accompanying drawings, where the same or similar reference numerals refer to the same or similar elements or elements having the same or similar function throughout. The embodiments described below by reference to the drawings are exemplary, are intended to explain the present invention, and are not to be construed as limiting the present invention.

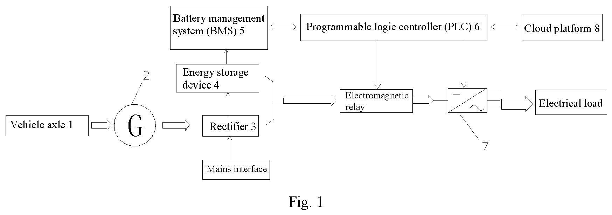

As shown in Fig. 1, a power generation and energy storage power supply system of a shaft end generator 2 according to the embodiment of the present invention includes a shaft end generator 2, a rectifier 3, an inverter 7, and a PLC 6.

The shaft end generator 2 is fixedly connected with a vehicle axle 1, and the vehicle axle 1 rotates to drive the shaft end generator 2 to generate power. The shaft end generator 2 is electrically connected with the rectifier 3, and the rectifier 3 is connected with an energy storage device 4 in parallel and then connected with to the inverter 7. The inverter 7 is connected with an electrical load. The shaft end generator 2 is configured to send generated current to the rectifier 3, the current is rectified by the rectifier 3, and the rectifier 3 sends the rectified current to the energy storage device 4 for power supply and/or directly sends the current to the inverter 7.

It is to be noted that the energy storage device in the technical solution of the present application may be a storage battery or a capacitor.

The PLC 6 is configured to collect present power information of the energy storage device 4 and switch power supply working conditions according to the collected power information. One end of the rectifier 3 in parallel connection with the energy storage device 4 is connected with the inverter 7 by connecting an electromagnetic relay. A driving coil of the electromagnetic relay is connected with the PLC 6. The PLC 6 controls a contact action of the electromagnetic relay to switch the power supply working conditions.

Working condition 1: when the present power information of the energy storage device 4 meets the requirement of the electrical load, the PLC 6 controls the current of the energy storage device 4 and/or the current rectified by the rectifier to be directly sent to the inverter.

Working condition 2: when the present power information of the energy storage device 4 cannot meet the requirement of the electrical load, the PLC 6 controls the rectifier 3 to directly send the rectified current to the energy storage device for charging, and when the energy storage device is charged to a set value, the energy storage device is restored to supply power to the inverter.

Working condition 3: if the electrical load does not need to use electricity or the output power of the rectifier is greater than the power consumed by the load, the rectifier charges the energy storage device to a full upper limit set by a BMS. This working condition is similar to working condition 2 except that at this moment, the load uses less power or does not use electricity; as for judging the output power of the rectifier and the power consumed by the load, it only needs to connect the output current of each socket in a vehicle-mounted distribution box according to the electrical load; a current transformer is arranged at a joint of the distribution box and a socket interface, a current value of a current interface is detected through the current transformer, and the electricity power of the electrical load is calculated; current limiting is generally carried out on the electrical load arranged on a vehicle; the maximum value of the output power of the rectifier is reached when the rectifier is fully loaded; and the generator is prevented from being damaged due to overload.

The PLC 6 is wirelessly connected to a cloud platform, and when the PLC 6 detects that the residual power of the energy storage device 4 reaches an alarm line, the PLC 6 sends alarm information, and informs corresponding personnel through a remote reporting system of the cloud platform to timely supplement power to the energy storage device 4 through an external mains supply.

In one embodiment of the present invention, under the normal operation working condition of a train, an axle drives a shaft end generator to generate power, the generated power is rectified through a rectifier within a vehicle speed range of 30 km/h to 120 km/h (the range may be adjusted through the rectifier according to a specific vehicle type), and the rectifier converts the current generated by the generator into three-phase current for supplying power to an energy storage device.

It is to be noted that a PLC sets a voltage range of a BMS, and the BMS of the energy storage device automatically determines whether to charge the energy storage device according to a real-time voltage level of a power supply. When an electrical load needs to work, if the train stops temporarily, the shaft end generator cannot generate current at this moment, and the energy storage device supplies power at this moment.

When the train operates, the PLC switches, by collecting power information of the energy storage device, independent power supply of the energy storage device, independent power supply of the rectifier, or power supply of the energy storage device and the rectifier to the inverter together.

When the train is re-marshaled at a station, the energy storage device (within a rated capacity of the energy storage device) may be used to supply power to the inverter. If the residual power of the energy storage device reaches an alarm line, alarm information will be informed to corresponding personnel through a remote reporting system of a cloud platform 8 to timely supplement power to the energy storage device through an external mains supply.

The working state information of the generator, the rectifier and the energy storage device is extracted by the PLC and logically judged, so that each system can operate intelligently without manual intervention. The cloud platform stores the history and current working state information of each unit of the system and can transmit relevant information to relevant personnel through a remote reporting module.

The present invention also provides a power generation and energy storage power supply method of a shaft end generator, including the following steps.

S1: A shaft end generator is connected with a vehicle axle, the vehicle axle rotates to drive the shaft end generator to generate power, the shaft end generator sends generated current to a rectifier, and the rectifier rectifies the current.

S2: A PLC collects present power information of an energy storage device and switch power supply working conditions according to the collected power information, when the PLC collects the present power information of the energy storage device, the present power information is collected through a BMS, the energy storage device is connected with the BMS, the BMS collects the present power information of the energy storage device, and the collected power information of the power supply is sent to the PLC.

When the power supply working conditions are switched, an electromagnetic relay is connected with one end of the rectifier in parallel connection with the energy storage device, and the end is connected with an inverter through the electromagnetic relay; a driving coil of the electromagnetic relay is connected with the PLC; and the PLC controls a contact action of the electromagnetic relay to switch the power supply working conditions.

Working condition 1: when the present power information of the energy storage device meets the requirement of an electrical load, the PLC controls the current of the energy storage device and/or the rectified current to be directly sent to the inverter.

Working condition 2: when the present power information of the energy storage device cannot meet the requirement of the electrical load, the PLC controls the rectifier to directly send the rectified current to the energy storage device for charging, and when the energy storage device is charged to a set value, the energy storage device is restored to supply power to the inverter.

Working condition 3: if the load does not need to use electricity or the output power of the rectifier is greater than the power consumed by the load, the rectifier charges the energy storage device to a full upper limit set by the BMS.

The method further includes: S3, the PLC is wirelessly connected to a cloud platform, and when the PLC detects that the residual power of the energy storage device reaches an alarm line, the PLC sends alarm information to the cloud platform, and informs corresponding personnel through a remote reporting system of the cloud platform to timely supplement power to the energy storage device through an external mains supply.

In one embodiment of the present invention, under the normal operation working condition of a train, an axle drives a shaft end generator to generate power, the generated power is rectified through a rectifier within a vehicle speed range of 30 km/h to 120 km/h (the range may be adjusted through the rectifier according to a specific vehicle type), and the rectifier converts the current generated by the generator into three-phase current for supplying power to an energy storage device.

It is to be noted that a PLC sets a voltage range of a BMS, and the BMS of the energy storage device automatically determines whether to charge the energy storage device according to a real-time voltage level of the energy storage device. When an electrical load needs to work, if the train stops temporarily, the shaft end generator cannot generate current at this moment, and the energy storage device supplies power at this moment.

When the train operates, the PLC switches, by collecting power information of the energy storage device, independent power supply of the energy storage device, independent power supply of the rectifier, or power supply of the energy storage device and the rectifier to the inverter together.

When the train is re-marshaled at a station, the energy storage device (within a rated capacity of the energy storage device) may be used to supply power to the inverter. If the residual power of the energy storage device reaches an alarm line, alarm information will be informed to corresponding personnel through a remote reporting system of a cloud platform to timely supplement power to the energy storage device through an external mains supply.

The working state information of the generator, the rectifier and the energy storage device is extracted by the PLC and logically judged, so that each system can operate intelligently without manual intervention. The cloud platform stores the history and current working state information of each unit of the system and can transmit relevant information to relevant personnel through a remote reporting module.

In the description of this description, the description of reference terms "one embodiment", "some embodiments", "examples", "specific examples", or "some examples" and the like means that particular features, structures, materials, or characteristics described in combination with the embodiment or example are included in at least one embodiment or example of the present invention. In this description, schematic representations of the above terms do not necessarily refer to the same embodiment or example. Moreover, the particular features, structures, materials, or characteristics described may be combined in any suitable manner in any one or more embodiments or examples.

While the embodiments of the present invention have been shown and described, it is to be understood that the above embodiments are exemplary and not to be construed as limiting the present invention. Changes, modifications, substitutions, and variations of the above embodiments may occur to those of ordinary skill in the art without departing from the principle and spirit of the present invention. The scope of the present invention is defined by the appended claims and their equivalents.

## Claims

1. A power generation and energy storage power supply system of a shaft end generator, comprising a shaft end generator, a rectifier, an energy storage device, an inverter, and a programmable logic controller (PLC), wherein
the shaft end generator is fixedly connected with a vehicle axle, and the vehicle axle rotates to drive the shaft end generator to generate power; the shaft end generator is electrically connected with the rectifier, and the rectifier is connected with the energy storage device; the rectifier is connected with the energy storage device in parallel and then connected with the inverter; the inverter is connected with an electrical load; the shaft end generator is configured to send generated current to the rectifier, the current is rectified by the rectifier, and the rectifier sends external mains or the rectified current of the shaft end generator current to the energy storage device for power supply or directly sends the current to the inverter;
the PLC is configured to collect present power information of the energy storage device and switch power supply working conditions according to the collected power information;
working condition 1: when the present power information of the energy storage device meets the requirement of the electrical load, the PLC controls the rectified current and/or the current of the energy storage device to be directly sent to the inverter;
working condition 2: when the present power information of the energy storage device cannot meet the requirement of the electrical load, the PLC controls the rectifier to directly send the rectified current to the energy storage device for charging, and when the energy storage device is charged to a set value, the energy storage device is restored to supply power to the inverter; and
working condition 3: if the load does not need to use electricity or the output power of the rectifier is greater than the power consumed by the load, the rectifier charges the energy storage device to a full upper limit set by a battery management system (BMS).

2. The power generation and energy storage power supply system of a shaft end generator according to claim 1, wherein the energy storage device is connected with the BMS, and the BMS is configured to collect the present power information of the energy storage device and send the collected power information of the power supply to the PLC.

3. The power generation and energy storage power supply system of a shaft end generator according to claim 1, wherein one end of the rectifier in parallel connection with the energy storage device is connected with the inverter by connecting an electromagnetic relay; a driving coil of the electromagnetic relay is connected with the PLC; and the PLC controls a contact action of the electromagnetic relay to switch the power supply working conditions.

4. The power generation and energy storage power supply system of a shaft end generator according to claim 1, wherein the PLC is wirelessly connected to a cloud platform, and when the PLC detects that the residual power of the energy storage device reaches an alarm line, the PLC sends alarm information to the cloud platform, and informs corresponding personnel through a remote reporting system of the cloud platform to timely supplement power to the energy storage device through an external mains supply.

5. A power generation and energy storage power supply method of a shaft end generator, comprising the following steps:
S1: connecting a shaft end generator with a vehicle axle, driving the shaft end generator to generate power using the rotation of the vehicle axle, sending generated current to a rectifier by the shaft end generator, and rectifying the current by the rectifier; and
S2: collecting present power information of an energy storage device by a programmable logic controller (PLC), and switching power supply working conditions according to the collected power information, wherein
working condition 1: when the present power information of the energy storage device meets the requirement of an electrical load, the PLC controls the rectified current and/or the current of the energy storage device to be directly sent to an inverter;
working condition 2: when the present power information of the energy storage device cannot meet the requirement of the electrical load, the PLC controls the rectifier to directly send the rectified current to the energy storage device for charging, and when the energy storage device is charged to a set value, the energy storage device is restored to supply power to the inverter; and
working condition 3: if the load does not need to use electricity or the output power of the rectifier is greater than the power consumed by the load, the rectifier charges the energy storage device to a full upper limit set by a battery management system (BMS).

6. The power generation and energy storage power supply method of a shaft end generator according to claim 5, wherein S2 further comprises: when the PLC collects the present power information of the energy storage device, collecting the present power information through the BMS, connecting the energy storage device with the BMS, collecting the present power information of the energy storage device by the BMS, and sending the collected present power information of the energy storage device to the PLC.

7. The power generation and energy storage power supply method of a shaft end generator according to claim 5, wherein in S2, when the power supply working conditions are switched, an electromagnetic relay is connected with one end of the rectifier in parallel connection with the energy storage device, and the end is connected with the inverter through the electromagnetic relay; a driving coil of the electromagnetic relay is connected with the PLC; and the PLC controls a contact action of the electromagnetic relay to switch the power supply working conditions.

8. The power generation and energy storage power supply method of a shaft end generator according to claim 5, further comprising: S3, wirelessly connecting the PLC to a cloud platform, when the PLC detects that the residual power of the energy storage device reaches an alarm line, sending alarm information to the cloud platform by the PLC, and informing corresponding personnel through a remote reporting system of the cloud platform to timely supplement power to the energy storage device through an external mains supply.
